# EUROPEAN PATENT SPECIFICATION

(11) **EP 4 572 933 B1**
(45) Date of publication and mention of the grant of the patent: **29.04.2026**
(21) Application number: 23776690.2
(22) Date of filing: 15.08.2023
(51) Int. Cl.: B27N 3/00, B27N 3/20, B27N 3/22, B29C 33/04, B29C 43/00, B29C 43/02, B29C 43/34, B29C 43/52, B30B 15/06, B30B 15/34, B27N 5/02, B29C 33/00

(54) **METHOD AND APPARATUS FOR PRODUCTION OF PALLET BLOCKS**
VERFAHREN UND VORRICHTUNG ZUR HERSTELLUNG VON PALETTENBLÖCKEN
PROCÉDÉ ET APPAREIL DE PRODUCTION DE BLOCS DE PALETTES

(30) Priority: 15.08.2022 HU 2200329
(43) Date of publication of application: 25.06.2025
(73) Proprietor: Kecskeméti, Ferenc, 5000 Szolnok (HU); Balla, Péter, 5435 Martfü (HU)
(72) Inventor: Kecskeméti, Ferenc, 5000 Szolnok (HU); Balla, Péter, 5435 Martfü (HU)
(74) Representative: Danubia Patent & Law Office LLC
(86) International application number: PCT/HU2023/050050
(87) International publication number: WO 2024/038290

(56) References cited:
- WO-A2-2006/088433
- US-A1- 2019 389 088

## Description

The invention relates to a method for the production of pallet blocks, during which the wood scrap and binder components of the pallet block are prepared in accordance with the predetermined mechanical properties of the pallet block to be produced, then the prepared ingredients are mixed and fed into the press mould of a press die as a pallet block raw material, then the pallet block raw material fed into the press box of the press die is pressed to size and the binder is cross-linked using heat, then the pallet block pressed to size and forming a single piece by the cross-linked binder is removed from the press mould of the press die.

The invention also relates to an apparatus for preparing of a pallet block using the proposed method, comprising a feeding device that delivers pallet block raw material into the press mould of a press die, a press die that presses the pallet block material fed into the press mould of the press die, a heating element associated with the press mould and heating the pressed pallet block material fed into the press mould, and pusher means for removal the completed pallet block from the press mould.

An EPAL-type pallet is a loading board of the same size as the EUR-type pallet, the production and repair of which is supervised by the European Pallet Association (EPAL). UIC/EUR, EPAL/EPAL and EPAL/EUR pallets are interchangeable in all European countries. The specifications for pallets, which can be said to be widespread in Europe, can be found in the UIC 435-2 standard: the wood used as the base material for euro-type pallets can be poplar, pine, birch, alder, and hardwood species, pallet blocks, in other words, legs, can be made as pressed blocks or of wood. Thanks to the pressed blocks, the drying time of the pallets is significantly shorter, which reduces the associated drying costs, which is why pressed blocks are increasingly used for pallets. The production of a pallet block (also known as pallet stool) basically requires two components, mixed to an appropriate degree: wood chips and resin. By wood chips both sawdust and wood shavings are meant, the resin is often melamine-containing urea-formaldehyde resin, which begins to cross-link under the influence of heat. However, during the production of a pallet, the resin cross-linking that takes place during the pressing of the pallet block significantly and disadvantageously increases the production time of the pallet.

According to a known method resin is introduced from the outside into the pressed product by the aid of steam. This is not advantageous in the case of pallet blocks, because semi-finished products produced in this way, especially rod products, always require post-processing, they should be cut to size by sawing. There is also a known solution where the product is manufactured in a press mold, so there is no need to saw it, since several blocks can be pressed out of one mold at the same time, but the dosage is based on volume.

WO 2006088433 A2 disclose a process for extracting fibres fibres from oil palm parts, including empty fruit bunches - EFB - for use in making hard board-like articles, such as a pallet. The process comprises the steps of feeding the EFB to a cutter, cutting the EFB into small/fine pieces, defibrating the cut EFB pieces into strands of fibres, and washing to remove oil from the fibres. The EFB fibres are admixed with adhesive composition which may include latex, plant -based starch composition and an alkaline compound as preservative such as sodium hydroxide (NaOH). Multiple layers of the adhesive admixed fibres are spread evenly over a plane and compressed into a pre-moulding piece for ease of handling. The pre-moulding piece is then oven-dried until 20% moisture remains before it is placed in a pallet mould and compressed to form the completed pallet which is left to set, dry and/or cure in ambience. The disadvantage of the process is that it takes a lot of time, which reduces productivity.

US 2019389088 A1 descloses a method of manufacture of medium and high density fibreboard with moisture and mildew resistance and low formaldehyde emission, which includes the steps of providing wood chips; pre-steaming; refining the wood chips into fibers and adding various, precisely defined additive components; separating qualified fibers to measuring silo; laying the fibers onto a mat formation platform uniformly to form a fiber mat by pre-pressing; preheating the fiber mat; and processing continuous hot-pressing to form a raw board. The disadvantage of the method is that it involves many steps and is overly complicated.

HU 231225 describes a process for the production of pallet blocks. The document, the relevant content of which is referred to as a reference, thoroughly explores the state of the art and the shortcomings of known pallet block production processes. During the presented method, a sawdust mixture containing 20-80% poplar grass dust and 80-20% pine sawdust is prepared; the sawdust mixture is dried with air at 400-500 °C to a maximum moisture content of 6%; a raw block material is mixed from the dried sawdust mixture, polycondensation resin and curing liquid, which is filled into a forming mold, then pressed and polymerized in the mold to make a semi-finished block product; then the semi-finished block product is taken out of the mold and chopped to the size of a finished pallet block product. The aim and result of the proposed solution is to use poplar wood with a similar moisture content to form a composite that meets EPAL's soaking and nailing requirements, but it does not provide a solution to speed up the outlined time-consuming curing process.

A production process has been aimed that can eliminate the shortcomings outlined above: no cutting is required, and there is no volume dosing but precisely measured unit dosing. In this way, it is possible to ensure that scrap, i.e., a product of inadequate density is not produced. In any case, production of bars is associated with such serious technological challenges as the subsequent inspection of the final product, and based on its results, modification of inputs by incorporating feedback processes. In such a system, production of scrap is inevitable and can only be reduced by very high-quality feedback. Volume dosing does not allow raw materials of different densities to be applied or fed into the press at will, since the density of the final product changes accordingly, which also means limitations.

The aim of the invention is to significantly shorten the production time of pallet blocks while maintaining high quality of the pallet blocks. Our goal is also to reduce the production losses of the raw materials used, as well as reducing work phases of the production.

Based on the above experiences we came to this realization that stable, scrap-free production can be achieved only by pressing a raw material with an accurately measured mass in advance. However, this is only economical if the curing time of the resin in the product can be shortened to such an extent that an apparatus with economies of scale can be built.

The invention is based on the realization that a pallet block can be produced without material loss, in accordance with the strict dimensional specifications, in a significantly shorter time, if batching is done by density rather than by volume, and by providing a more uniform volume heat effect in the pressed raw material for the curing of the resin. During our attempts with traditional methods, it was not possible to achieve homogeneous cross-linking of the resin in a suitable time, a very long time was needed for bonding if we only applied heat to the pressed material from the outside. The possibility provided by the relevant standard that a hole can also be made in the middle of the product, i.e., the pallet block, gave us the idea that this disadvantage can be reduced if heat is introduced into the pressed product through the hole. For this purpose, the forming mandrel of the hole can be advantageously used, because with its appropriate design, it is possible to immediately introduce a large amount of heat to the inside of the product.

The set goal has been achieved with a method according to claim 1 and an apparatus for implementing the method according to claim 5. Several advantageous implementations of the invention are disclosed in dependent claims.

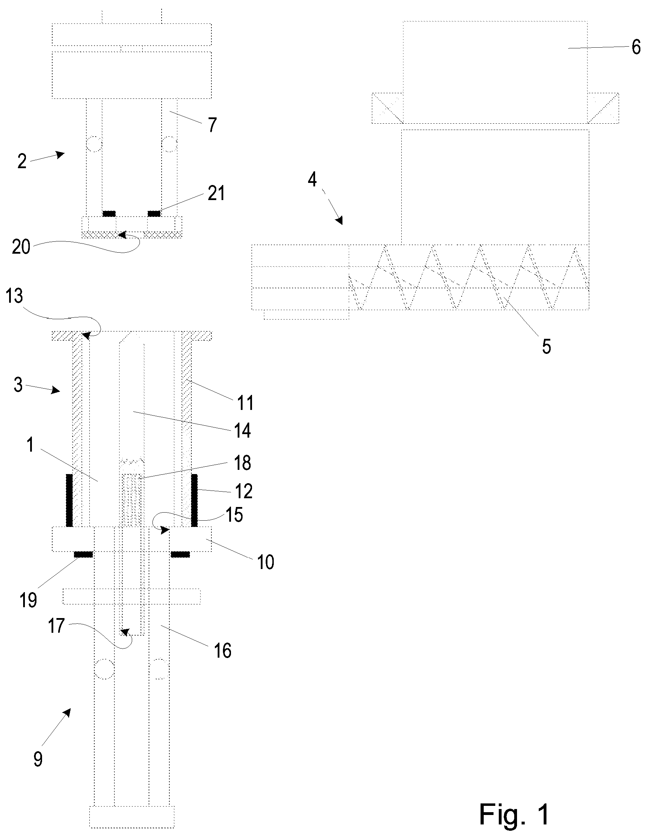

The invention is described below in more detail in connection with an exemplary implementation of the method and an exemplary embodiment of the equipment, with reference to the attached drawing, wherein Figure 1 schematically shows a possible implementation of the apparatus according to the invention and the operation that implements the method according to the invention.

The initial concept was to manufacture the product one by one, as this avoids cutting waste, which means a material saving of approx. 8%. An exemplary way of implementing the proposed method is presented with the help of the block scheme shown in Figure 1. During the production of a pallet block, wood scrap and binder components of a pallet block are prepared according to predefined mechanical properties of the pallet block to be produced. One of the advantages of the method is that its application is not limited by the type and nature of the wood scrap used, i.e., whether it is bark, sawdust, waste wood, etc., as well as, for example, by its flexibility or adhesive friction. It is an essential measure to determine the density of the wood scrap to be used by the help of a measuring unit arranged upstream of the feeder 4 in the processing direction of the pallet block raw material 1. In the shown embodiment this is a scale with a high accuracy, for example ±2%, in order to be able to carry out the further steps. Any resin commonly used in the field for this purpose can be used as a binder; no other component is used in the example presented. In a next step the ingredients are mixed to obtain raw material 1. There is a clear and permanent relationship between the final shape and exact size of the pallet block to be produced and the weight of the pallet block raw material 1 used for it. Therefore, in order to obtain a finished product that does not require any further processing steps after the pallet block is pressed, raw material 1 having a same initial mass as the finished product after the production of the pallet block must be fed into a press mould 3 of a press die 2. In the presented example, this is solved by using a screw feeder 4 with a structure and function known to a person skilled in the art to deliver the raw material 1 to the press mould 3, which is located and operates horizontally, i.e., an auger 5 of the screw feeder 4 rotates along a horizontal axis and ensures advancing of the supplied raw material 1. The longitudinal axis of the feeder 4 runs perpendicular to the longitudinal axis of a press head 7 and press mould 3 of the press die 2, intersecting said longitudinal axis. The feeder 4 is arranged adjacent to the press mould 3 and can be moved in its longitudinal direction above the press mould 3.

The horizontal arrangement of the feeder 4 according to the example is only one possibility, the feeder 4 can be arranged at an angle relative to the press die 2, or it can be arranged by ensuring that the position of the feeder 4 does not affect the amount of raw material 1 delivered. Another feature of the feeder 4 is that it can be moved back and forth along its longitudinal axis, i.e., in the horizontal position in the present example, "forward" means the direction in which the raw material 1 exits the feeder 4. The precise measurement of the raw material 1 is carried out with a measuring unit comprising a digital dosing scale 6 installed above an auger 5 of the feeder 4, whose lower outlet, which can be opened and closed in a controllable way, is located above the auger 5 of the feeder 4, and from which the exact amount of raw material 1 falls into the space of the auger 5 of the feeder 4 without residue. The complete movement of the raw material 1 is ensured by the appropriate choice of materials for the parts of the device that come into contact with the raw material 1, namely the parts of the dosing scale 6 and the feeder 4, for example using stainless steel as known for a person skilled in the art.

The press die 2 illustrated in Fig. 1 is a vertical operated tool, i.e., a press head 7 of the press die 2 is vertically movable above the press mould 3, and a pusher means 9 comprising a vertically movable pusher element is arranged below the press mould 3. Metal side walls 11 forming the vertical sides of the pallet block to be produced is connected to a base plate 10 of the press mould 3, where the lower third of said metal side walls 11 is used in this example as an external heating element of a heating means of known structure and operation and is surrounded by a heating jacket 12 that transfers the heat to the metal side wall 11, causing cross-linking of the resin. Heat can be generated in a manner known and customary in the field, in the present example the heating jacket 12 comprises electric heating that ensures a constant temperature. The upper side of the press mould 3 is open and designed as an opening 13 for loading of the raw material 1, outputting the manufactured pallet block 1 and is designed for receiving the press head 7 of the press die 2 and surrounding it in a form-fit manner. A forming mandrel 14 extending vertically upwards to the opening 13 of the press mould 3 is fixed centrally on the base plate 10 of the press mould 3, which forms during the production of the pallet block a central hole, often found in pallet blocks, and which also serves as a heating pipe. In the base plate 10 of the press mould 3, an opening 15 is formed centrally and concentrically with the forming mandrel 14, surrounding a piston 16 in a form-fit manner, forming the pushing element of the pusher means 9 that removes the finished pallet block from the press mould 3. The forming mandrel 14 is a hollow element and is connected to a heating pipe, in the shown embodiment a steam pipe 17 connected to the press mould 3 inside the piston 16 of the product pusher means 9. The steam pipe 17 is connected to a steam source that produces steam at a temperature that allows the resin to cross-link, which is not shown separately in the drawing for the sake of clarity, however, the implementation and operation of which can be considered a routine activity for a person skilled in the art. The cylindrical shell of the molding mandrel 14, forming a channel and which is essentially the same height as the height of the already pressed pallet block inside the press mould 3, is provided with perforations 18, through which the steam guided through the steam pipe 17 into the inner cavity of the molding mandrel 14 can be introduced into the already pressed material 1 in the press mould 3 by overpressure, and intensively promotes rapid and homogeneous cross-linking of the resin in it. The latter was confirmed unanimously by the examination of pallet block sections produced in this way. Discharge of the excess part of the introduced high-pressure steam from the press mould 3 is ensured by a peripheral steam discharge ring 19 of the opening 15 of the base plate 10, connected to the steam pipe 17 and made of vapor-permeable material, as well as a peripheral steam removal ring 21 made of vapor-permeable material of a central opening 20 of the press head 7, allowing the forming mandrel 14 to pass through during pressing.

After introducing the raw material 1 of controlled mass of into the feeder 4, the latter will be moved forward horizontally until its front end reaches above the opening 13 of the press mould 3, and the raw material 1 will be fed with the auger 5 into the press mould 3 without residue, then the feeder 4 will be pulled back to its rear position. The raw material 1 fed into the press mould 3 of the press die 2 will then be pressed to exact size, and the resin used as a binder will be cured using heat. In doing so, as an essential measure of the invention, the raw material 1 will be heated from the inside with the heat supplied to the central region of the raw material 1 fed into the press mould 3 of the press die 2, or more precisely with steam supplied to the raw material 1 through the forming mandrel 14 and, for example, a known controllable valve and the perforation 18, the curing of the binder will be promoted. After the end of the cross-linking, the typical time of which is in a range of 2.5-3-5 minutes according to preliminary experiments, the press head 7 will be lifted and removed from the press mould 3, and the pallet block pressed to size and formed a single, uniform piece by the cross-linked binder, will be moved upwards by the piston 16 of the pusher element of the pusher means 9 by from the press mould 3 of the press die 2 through its opening 13, then the pallet block already leaving the press mould 3 and resting on the pusher element will be removed by repeatedly moving the feeder 4 in forward direction, moving the pallet block out of the working range of the press die 2. Then the pallet block will be collected in some known way and stored before being transported, since no further operations shall be performed. After that or at the same time, the pusher element is moved to its lower end position, thereby providing space for the introduction of the next dose of raw material 1.

The presented operation can be repeated cyclically.

It can be seen that an essential element of the apparatus according to the invention is the digital dosing scale 6, which ensures that the density of the raw material 1 is set in advance, thanks to which each finished product will have the same weight, and since the volume is fixed by the referenced standard, it will also have the same density. With the dosing scale 6, the previously mixed raw material 1 - a mixture of wood chips and resin - is measured one by one in accordance with the prescribed standard and fed into the press mould 3 via the feeder 4. The referenced standard specifies the minimum number of kilograms per cubic meter of product. With the digital dosing scale 6 this can be ensured in advance, there is no need to integrate complicated post-checking processes into the production system.

Another important element is the forming mandrel 14, which forms a standard-sized hole in the center of the produced pallet block, and which, due to its design, is also suitable for introducing heat into the interior of the product through it, where the heat is introduced by steam injection. The press mould 3 is heated from the outside, so the product receives heat from both the outside and the inside. As a result of the steam injected after pressing, the resin forms a homogeneous cross-section in the entire cross-section of the product, namely in less than three minutes. Without such steaming, curing takes even more than an hour, as the heat to be introduced into the interior of the product by the heating jackets 12 arranged on the sides of the press mould 3 reaches the interior very slowly due to the thermal insulation property of the wood, thus the internal temperature required for curing, which is approx. 130°C, is difficult to reach. With the steam introduced through the perforated lower part, which ensures a homogeneous inflow of steam into the product, this temperature is immediately reached, while the external heating ensures that this heat is not lost but remains constant during curing.

It is important that the press mould 3 is designed in such a way that it is suitable for receiving one unit of raw material 1 measured by the dosing scale 6. The raw material 1 will be put around the inner forming mandrel 14 in the press mould 3 with the help of the auger 5 of the feeder 4, and after filling, the product will be created by moving the press head 7 downwards. The press head 7 keeps the product under pressure until it is finished, i.e., until the curing is completed. After curing, the press head 7 will be moved upwards, providing space until the product is removed from the press mould 3, which is realized by the upward movement of the lower pushing means 9.

Among the main advantages of the method and apparatus according to the invention, it can be highlighted that it is possible to produce a product of the same size and density in a short time: with the help of the invention, the curing process is usually shortened to less than 3 minutes. The production became independent of the quality of the wood scrap used - type of wood, type of wood scrap: bark, sawdust, waste wood, etc. - its flexibility and adhesive friction. With steaming, it is also possible to achieve that, in addition to the addition of resin, no other ingredients such as hardener (acid) or emulsion (slipper) are needed. After the product is finished, it does not require further treatment, i.e., cutting to size, but after a short rest period corresponding to the cooling time, a packable product is created. By using steaming, not only the setting time can be reduced but also much safer curing process and better quality can be achieved than in the case of external heating alone.

### List of reference marks

1 raw material
2 press die
3 press mould
4 feeder
5 auger
6 dosing scale
7 press head
9 pusher means
10 base plate
11 side wall
12 heating jacket
13 opening
14 forming mandrel
15 opening
16 piston
17 steam pipe
18 perforation
19 steam discharge ring
20 opening
21 steam removal ring

## Claims

1. Method for the production of pallet blocks, comprising
preparing wood scrap and binder components of raw material (1) of the pallet block according to predetermined mechanical properties of the pallet block to be produced,
mixing the prepared ingredients and feeding the mixed ingredients as a raw material (1) for a pallet block into a press mould (3) of a press die (2),
pressing the raw material (1) of the pallet block fed into the press mould (3) of the press die (2) to size, then curing binder using heat,
removing the pallet block pressed to size and formed as a single piece due to the cross-linked binder from the press mould (3) of the press die (2),
during the preparation of the components of the pallet block, determining the density of the wood debris component of the pallet block to be produced,
feeding the wood scrap and binder components into the press mould (3) of the press die (2) as a pallet block raw material (1) with a mass equal to the pre-determined, finished mass of the pallet block to be produced,
during the curing the binder of the pallet block material (1), heating the pressed pallet block raw material (1) also from its inside with heat supplied to the press mould (3) of the press die (2) in the central region of the pressed pallet block raw material (1) and thereby promoting crosslinking of the used binder component.

2. The method according to claim 1, wherein during the preparation step the mass of the pallet block raw material (1) to be fed into the press mould (3) of the press die (2) is set to differ by no more than ±2% from the finished mass of the pallet block after production.

3. The method according to claim 1 or 2, wherein during the step of curing binder using heat the heat supplied to a center region of the pressed raw material (1) in the press mould (3) of the press die (2) is supplied to the pressed raw material (1) in the form of steam.

4. The method according to claim 3, wherein during the step of curing binder using heat the steam is supplied into the inside of the pressed raw material (1) through a perforated (18) channel extending in the middle of the press mould (3) of the press die (2) and surrounded by the pressed raw material (1) dwelling in the press mould (3) of the press die (2).

5. Apparatus for the implementation of a method according to any one of the claims 1-4 for production of a pallet block, comprising
a feeder (4) for supplying pallet block raw material (1) into a press mould (3) of a press die (2), a press die (2) for pressing the pallet block raw material (1) fed into the press mould (3) of the press die (2),
heating means associated with the press mould (3) for heating the pressed pallet block raw material (1) fed into the press mould (3) of the press die (2),
pusher means (9) for removing the completed pallet block from the press mould (3),
a measuring unit arranged upstream of the feeder (4) in the processing direction of the pallet block raw material (1) for determining the density of the pallet block raw material (1), wherein
the upper side of the press mould (3) is designed as an opening (13) for receiving the pallet block raw material (1) and discharging the finished pallet block, designed as an opening (13) that accommodates a press head (7) of the press die (2) and surrounds it in a form-fit manner, a base plate (10) of the press mould (3) comprises an opening (15) that accommodates a piston (16) of the pusher means (9) for removing the finished pallet from the press mould (3), surrounding the piston (16) in a form-fit manner,
a region of the metal side wall (11) of the press mould (3) is in heat-conducting contact with an external heating element of the heating means,
a heating pipe is introduced into the press mould (3) along a vertical longitudinal axis of the press mould (3),
the heating pipe is equipped with a circumferential perforation (18),
the heating pipe is in a controllable medium connection with a steam source,
the area surrounding the heating pipe of the press mould (3) is designed as a steam discharge ring (19) of vapor wicking material,
the piston (16) of the pusher means (9) that removes the finished pallet block from the press mould (3) is designed to surround said heating pipe.

6. The apparatus according to claim 5, wherein the heating pipe is formed by a forming mandrel (14) extending coaxially to the longitudinal axis of the press mould (3) to an upper side of the press mould (3), and an opening (20) for receiving the forming mandrel (14) is provided in the press head (7) of the press die (2).

7. The apparatus according to claim 6, wherein in the opening (20) in the press head (7) of the press die (2) receiving the forming mandrel (14) a steam removal ring (21) of vapor wicking material is inserted for connection with the introduced forming mandrel (14).

8. The apparatus according to any one of the claims 5-7, wherein
the feeder (4) comprises a screw feeder,
the measuring unit is mounted on the top of the screw feeder separately from it,
the longitudinal axis of the feeder (4) is arranged perpendicular to the longitudinal axis of the press head (7) and press mould (3), intersecting said axis, and
the feeder (4) is arranged adjacent to the press mould (3) and can be moved in its longitudinal direction above the press mould (3).

9. The apparatus according to any one of the claims 5-8, comprising a digital dosing scale (6) as a measuring unit.

## Patentansprüche

1. Verfahren zur Herstellung von Palettenklötzen, umfassend:
Aufbereiten von Holzresten und Bindemittelkomponenten des Rohmaterials (1) für den Palettenklotz gemäß vorgegebenen mechanischen Eigenschaften des herzustellenden Palettenklotzes,
Mischen der vorbereiteten Komponenten und Zuführen der Mischung als Rohmaterial (1) für einen Palettenklotz in eine Pressform (3) eines Presswerkzeuges (2),
Pressen des in die Pressform (3) des Presswerkzeuges (2) zugeführten Rohmaterials (1) auf die gewünschte Größe und anschließendes Aushärten des Bindemittels durch Erhitzen,
Entnehmen des auf die gewünschte Größe gepressten und durch das vernetzte Bindemittel als einteiliges Stück geformten Palettenklotzes aus der Pressform (3) des Presswerkzeuges (2),
bei der Aufbereitung der Komponenten des Palettenklotzes, Bestimmen der Dichte der Holzrestkomponente des herzustellenden Palettenklotzes,
Zuführen der Holzreste und Bindemittelkomponenten als Rohmaterial (1) für den Palettenklotz in die Pressform (3) des Presswerkzeuges (2) mit einer Masse, die der vorgegebenen Endmasse des herzustellenden Palettenklotzes entspricht,
während der Aushärtung des Bindemittels des Palettenklotzmaterials, Erhitzen des gepressten Palettenklotz-Rohmaterials (1) auch von innen durch Wärmezufuhr zur Pressform (3) des Presswerkzeuges (2) im zentralen Bereich des gepressten Palettenklotz-Rohmaterials (1) und dadurch Förderung der Vernetzung der verwendeten Bindemittelkomponente.

2. Verfahren nach Anspruch 1, wobei während des Vorbereitungsschritts die Masse des in die Pressform (3) des Presswerkzeuges (2) einzuführenden Rohmaterials (1) für den Palettenklotz so eingestellt wird, dass sie um nicht mehr als ±2% von der fertigen Masse des Palettenklotzes nach der Herstellung abweicht.

3. Verfahren nach Anspruch 1 oder 2, wobei während des Schritts des Aushärtens des Bindemittels mittels Wärme die dem gepressten Rohmaterial (1) in der Pressform (3) des Presswerkzeuges (2) zugeführte Wärme in Form von Dampf einem zentralen Bereich des gepressten Rohmaterials (1) in der Pressform (3) zugeführt wird.

4. Verfahren nach Anspruch 3, wobei während des Schritts des Aushärtens des Bindemittels mittels Wärme der Dampf durch einen perforierten Kanal (18), der sich in der Mitte der Pressform (3) des Presswerkzeuges (2) erstreckt und von dem in der Pressform (3) des Presswerkzeuges (2) befindlichen gepressten Rohmaterial (1) umgeben ist, in das Innere des gepressten Rohmaterials (1) geleitet wird.

5. Vorrichtung zur Durchführung eines Verfahrens nach einem der Ansprüche 1 bis 4 zur Herstellung eines Palettenklotzes, umfassend
eine Zuführung (4) zum Zuführen von Palettenklotz-Rohmaterial (1) in eine Pressform (3) eines Presswerkzeuges (2),
ein Presswerkzeug (2) zum Pressen des in die Pressform (3) zugeführten Palettenklotz-Rohmaterials (1),
eine mit der Pressform (3) verbundene Heizeinrichtung zum Erhitzen des gepressten Palettenklotz-Rohmaterials (1)
eine Ausstoßvorrichtung (9) zum Entnehmen des fertigen Palettenklotzes aus der Pressform (3),
eine der Zuführung (4) in Verarbeitungsrichtung des Palettenklotz-Rohmaterials (1) vorgeschaltete Messeinheit zur Bestimmung der Dichte des Palettenklotz-Rohmaterials (1),
wobei
die Oberseite der Pressform (3) als eine Öffnung (13) zur Aufnahme des Palettenklotz-Rohmaterials (1) und zum Ausstoß des fertigen Palettenklotzes ausgebildet ist, die einen Presskopf (7) desr Presswerkzeuges (2) aufnimmt und diesen formschlüssig umschließt,
eine Grundplatte (10) der Pressform (3) eine Öffnung (15) aufweist, die einen Kolben (16) der Ausstoßvorrichtung (9) zum Entnehmen des fertigen Palettenklotzes aus der Pressform (3) aufnimmt und den Kolben (16) formschlüssig umschließt,
ein Bereich der metallischen Seitenwand (11) der Pressform (3) in wärmeleitendem Kontakt mit einem externen Heizelement der Heizvorrichtung steht,
ein Heizrohr entlang der vertikalen Längsachse der Pressform (3) eingeführt ist,
das Heizrohr mit einer umlaufenden Perforation (18) versehen ist und in steuerbarer Mediumverbindung mit einer Dampfquelle steht,
der Bereich um das Heizrohr der Pressform (3) als Dampfaustrittsring (19) aus Dochtmaterial ausgebildet ist,
der Kolben (16) der Ausstoßvorrichtung (9), der den fertigen Palettenklotz aus der Pressform (3) entnimmt, so konstruiert ist, dass er das Heizrohr umschließt.

6. Die Vorrichtung nach Anspruch 5, wobei das Heizrohr durch einen Formdorn (14) ausgebildet ist, der sich koaxial zur Längsachse der Pressform (3) bis zu deren Oberseite erstreckt, und im Presskopf (7) des Presswerkzeuges (2) eine Öffnung (20) zur Aufnahme des Formdorns (14) vorgesehen ist.

7. Die Vorrichtung nach Anspruch 6, wobei in der Öffnung (20) im Presskopf (7) des Presswerkzeuges (2), die den Formdorn (14) aufnimmt, ein Dampfabfuhrring (21) aus Dochtmaterial zur Verbindung mit dem eingeführten Formdorn (14) eingesetzt ist.

8. Die Vorrichtung nach einem der Ansprüche 5 bis 7, wobei
die Zuführung (4) eine Schneckenzuführung umfasst,
die Messeinheit separat auf der Oberseite der Schneckenzuführung montiert ist,
die Längsachse der Zuführung (4) senkrecht zur Längsachse des Presskopfes (7) und der Pressform (3) verläuft und diese schneidet, und
die Zuführung (4) neben der Pressform (3) angeordnet ist und in Längsrichtung über der Pressform (3) beweglich ist.

9. Die Vorrichtung nach einem der Ansprüche 5 bis 8, umfassend eine digitale Dosierwaage (6) als Messeinheit.

## Revendications

1. Procédé de production de blocs de palette, comprenant :
préparation des déchets de bois et du liant constituant la matière première (1) du bloc de palette, selon les propriétés mécaniques prédéterminées de ce dernier ;
mélange des ingrédients préparés et leur introduction dans un moule de presse (3) d'une matrice de presse (2), constituant ainsi la matière première (1) du bloc de palette ;
pressage de la matière première (1) introduite dans le moule de presse (3) de la matrice de presse (2) aux dimensions voulues, puis le durcissement du liant par la chaleur ;
démoulage du bloc de palette (3) de la matrice de presse (2), une fois celui-ci mis aux dimensions voulues et formé d'une seule pièce grâce à la réticulation du liant ;
détermination de la densité des déchets de bois constituant le bloc de palette à produire, lors de la préparation des composants ;
introduction des déchets de bois et du liant dans le moule de presse (3) de la matrice de presse (2), constituant ainsi la matière première (1) du bloc de palette, avec une masse égale à la masse finie prédéterminée du bloc de palette à produire ;
pendant le durcissement du liant du bloc de palette, chauffant la matière première (1) du bloc de palette pressé également de l'intérieur avec de la chaleur fournie au moule de presse (3) de la matrice de presse (2) dans la région centrale de la matière première (1) du bloc de palette pressé et en favorisant ainsi la réticulation du composant liant utilisé.

2. Le procédé selon la revendication 1, dans lequel, pendant l'étape de préparation, la masse du matériau brut de bloc de palette (1) à introduire dans le moule de presse (3) de la matrice de presse (2) est fixée de manière à ne pas différer de plus de ±2 % de la masse finale du bloc de palette après production.

3. Le procédé selon la revendication 1 ou 2, dans lequel, pendant l'étape de durcissement du liant par la chaleur, la chaleur fournie à la zone centrale du matériau brut pressé (1) dans le moule de presse (3) de la matrice de presse (2) est fournie au matériau brut pressé (1) sous forme de vapeur.

4. Le procédé selon la revendication 3, dans lequel, pendant l'étape de durcissement du liant par la chaleur, de la vapeur est insufflée à l'intérieur de la matière première pressée (1) par l'intermédiaire d'un canal perforé (18) s'étendant au milieu du moule de presse (3) de la matrice de presse (2) et entouré par la matière première pressée (1) contenue dans le moule de presse (3) de la matrice de presse (2).

5. Appareil pour la mise en œuvre d'un procédé selon l'une quelconque des revendications 1 à 4 pour la production d'un bloc de palette, comprenant :
un alimentateur (4) pour introduire la matière première (1) du bloc de palette dans un moule de presse (3) d'une matrice de presse (2) ;
une matrice de presse (2) pour comprimer la matière première (1) du bloc de palette introduite dans le moule de presse (3) de la matrice de presse (2) ;
un dispositif de chauffage associé au moule de presse (3) pour chauffer la matière première (1) du bloc de palette comprimée et introduite dans le moule de presse (3) de la matrice de presse (2) ;
un poussoir (9) pour extraire le bloc de palette fini du moule de presse (3) ;
une unité de mesure disposée en amont de l'alimentateur (4), dans le sens de traitement de la matière première (1), pour déterminer la densité de cette matière première ;
dans lequel :
la face supérieure du moule de presse (3) étant conçue comme une ouverture (13) pour recevoir la matière première (1) du bloc de palette et évacuer le bloc de palette fini, conçu comme une ouverture (13) destinée à recevoir la tête de presse (7) de la matrice de presse (2) et l'entou-rant par ajustement parfait ;
une plaque de base (10) du moule de presse (3) comportant une ouverture (15) destinée à recevoir le piston (16) du poussoir (9) permettant d'extraire la palette finie du moule de presse (3), entourant le piston (16) par ajustement parfait ;
une zone de la paroi latérale métallique (11) du moule de presse (3) est en contact thermique avec un élément chauffant externe du système de chauffage ;
un tube chauffant est introduit dans le moule de presse (3) selon son axe longitudinal vertical ;
ce tube chauffant est muni d'une perforation circonférentielle (18) ;
ce tube chauffant est relié par un fluide caloporteur à une source de vapeur;
la zone entourant le tube chauffant du moule de presse (3) est conçue comme un anneau d'évacuation de vapeur (19) en matériau absorbant la vapeur ;
le piston (16) du poussoir (9) qui retire le bloc de palette fini du moule de presse (3) est conçu pour entourer ledit tuyau de chauffage.

6. L'appareil selon la revendication 5, dans lequel le tube chauffant est constitué d'un mandrin de formage (14) s'étendant coaxialement à l'axe longitudinal du moule de presse (3) jusqu'à sa face supérieure, et une ouverture (20) destinée à recevoir le mandrin de formage (14) est pratiquée dans la tête de presse (7) de la matrice de presse (2).

7. L'appareil selon la revendication 6, dans lequel un anneau d'évacuation de vapeur (21) en matériau absorbant la vapeur est inséré dans l'ouverture (20) de la tête de presse (7) de la matrice de presse (2) destinée à recevoir le mandrin de formage (14), afin d'être raccordé au mandrin de formage (14).

8. L'appareil selon l'une quelconque des revendications 5 à 7, dans lequel :
l'alimentateur (4) comprend un alimentateur a vis,
l'unité de mesure est montée sur le dessus de l'alimentateur a vis séparément de celui-ci,
l'axe longitudinal de l'alimentateur (4) est disposé perpendiculairement a l'axe longitudinal de la tête de presse (7) et du moule de presse (3), intersectant ledit axe, et
l'alimentateur (4) est disposé a côté du moule de presse (3) et peut être déplacé dans sa direction longitudinale au-dessus du moule de presse (3).

9. L'appareil selon l'une quelconque des revendications 5 à 8, comprenant une balance de dosage numérique (6) comme unité de mesure.
